# EUROPEAN PATENT SPECIFICATION

(11) **EP 3 540 540 B1**
(45) Date of publication and mention of the grant of the patent: **30.06.2021**
(21) Application number: 17869325.5
(22) Date of filing: 09.11.2017
(51) Int. Cl.: G05B 19/418

(54) **PROCESS DESIGN ASSISTANCE APPARATUS, PROCESS DESIGN ASSISTANCE METHOD, AND PROGRAM**
HILFSVORRICHTUNG FÜR PROZESSDESIGN, HILFSVERFAHREN FÜR PROZESSDESIGN UND PROGRAMM
APPAREIL D'AIDE À LA CONCEPTION DE PROCESSUS, PROCÉDÉ D'AIDE À LA CONCEPTION DE PROCESSUS ET PROGRAMME

(30) Priority: 11.11.2016 JP 2016220735
(43) Date of publication of application: 18.09.2019
(73) Proprietor: NEC Corporation, Tokyo 108-8001 (JP)
(72) Inventor: TANOUE, Mitsuteru, Tokyo 108-8001 (JP); YONEKURA, Kazutoshi, Tokyo 108-8001 (JP); EDA, Hajime, Tokyo 136-8627 (JP)
(74) Representative: Vossius & Partner Patentanwälte Rechtsanwälte mbB
(86) International application number: PCT/JP2017/040415
(87) International publication number: WO 2018/088470

(56) References cited:
- EP-A2- 1 341 114
- JP-A- 2003 241 822
- JP-A- 2011 242 904
- US-A1- 2006 212 323
- US-A1- 2010 114 355
- US-A1- 2014 364 985

## Description

### FIELD

### [REFERENCE TO RELATED APPLICATION]

The present invention is based upon and claims the benefit of the priority of Japanese patent application No. 2016-220735, filed on November 11, 2016.

The present invention relates to a process design support apparatus, a process design support method, and a program. In particular, it relates to a process design support apparatus, a process design support method, and a program for supporting designing a BOP (Bills Of Process) that represents manufacturing processes of products.

### BACKGROUND

At "manufacturing" sites in the manufacturing industry, etc., PLM (product lifecycle management) software for integrally managing product technology information about design drawings, specifications, a part list, etc. has been in widespread use. Such PLM software includes a function of creating and managing a part list (BOM: Bills Of Material) including part-based configurations (or product structures) indicating kinds, quantities, etc. of parts included in a product. By integrally managing the product technology information based on the PLM software and allowing a plurality of departments (a development department, a production engineering department, a material department, a production management department, a manufacturing department, etc.) to share the related information, it is possible to bring new products to market more quickly and reduce costs.

PTL 1 and PTL2 describe a technique for automatically generating a work sequence by referring to a table in which CAD (computer-aided design) information and process kinds (namely, kinds of processes) are associated with each other, extracting process kinds for manufacturing products from the CAD information about the products, and rearranging the process kinds by referring to a template representing a process sequence relationship.

### CITATION LIST

### PATENT LITERATURE

PTL 1: Japanese Patent Kokai Publication No. JP-2010-123105A
PTL 2: US 2014/364985 A1

### SUMMARY

### TECHNICAL PROBLEM

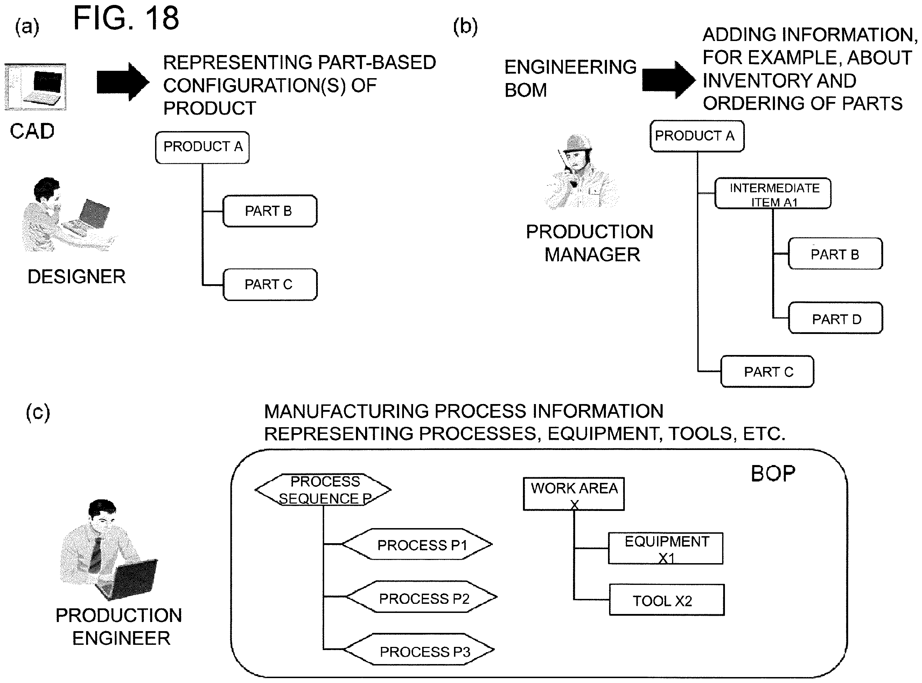

"A part list (BOM: Bills Of Material)" is standard information about an individual product itself, the information representing "the kinds of parts and the number of parts of an individual kind" used to manufacture the product. As illustrated in Fig. 18(a), a designer creates an engineering BOM that represents the part-based configurations of a product by using CAD (computer-aided design), etc. In addition, as illustrated in Fig. 18(b), a production manager creates a manufacturing BOM by adding information, for example, about the inventory and the ordering of the parts to the engineering BOM. Hereinafter, unless otherwise stated, a "BOM" refers to a manufacturing BOM.

In contrast, a "BOP (Bills Of Process)" is standard information about manufacturing processes, the information representing the kinds of processes", "the procedures of the processes", and the kinds of equipment and tools" used to manufacture an individual product or an individual part included in the product. As illustrated in Fig. 18(c), a production engineer creates a BOP formed by, for example, a "process list" that represents the processes included in an individual process sequence and a "resource list" that represents the resources (equipment, tools, personnel, etc.) included in an individual work area.

As described above, the existing PLM software provides a function of creating and managing a BOM and allowing a plurality of departments to share the related information, for example. However, along with globalization of manufacturing sites and advancement in manufacturing technology, there has been an increasing need for management based on not only a BOM (Fig. 18(b)) and but also a BOP (Fig. 18(c)) including a process list and a resource list in recent years.

By integrally managing a BOP on PLM software, manufacturing-related knowledge (for example, manufacturing knowledge such as a QC process list and work instructions) can be accumulated, shared, and transferred. In this way, the manufacturing knowledge will not be accumulated only individually, and the manufacturing will not be affected by aging or retirement of experienced engineers. In addition, by integrally managing a BOP, standardization of the information about the processes and resources can be facilitated, and the manufacturing process will not be managed only by the manufacturing site(s).

In addition, by integrally managing (namely, by collectively managing) a BOM and a BOP, in the event of a specification change or a malfunction, the affected range including not only parts but also processes and equipment can be determined. Thus, the event can be managed promptly and appropriately. In addition, by integrally managing a BOM and a BOP, product design in view of the equipment and manufacturing process can be encouraged, and sharing equipment enables reduction of fixed costs. In addition, by integrally managing a BOM and a BOP, concurrent engineering on product design and production engineering can be realized. In this way, evaluation results on the productivity can quickly be fed back to the product design. In addition, by creating and registering a BOP on PLM software separately from a BOM, even when a BOM is not created yet, the process design can be started ahead of schedule.

According to the technique described in PTL 1, CAD information including the product- and part-related information and process-related information and a table in which the kinds of processes and parts are associated with each other need to be prepared in advance. According to this technique, the part-related information and the process-related information needs to be designed simultaneously. Namely, the process-related information cannot be designed independently (for example, ahead of schedule) from the part-related information.

Thus, the challenge is to realize integral management of a BOM (a part list) and a BOP (a process list or a resource list) while enabling designing of the BOP independently from designing of the BOM. It is an object of the present invention to provide a process design support apparatus, a process design support method, and a program that contribute to resolving the challenge.

### SOLUTION TO PROBLEM

A process design support apparatus according to a first aspect includes: a part list storage part that holds a part list representing a part(s) included in a product; a process list storage part that holds a process list representing a process(es) included in a process sequence(s); and an association part that associates an item(s) included in the part list with an item(s) included in the process list.

A process design support method according to a second aspect includes steps of: causing a computer to hold a part list representing a part(s) included in a product; causing a computer to hold a process list representing a process(es) included in a process sequence(s); and causing a computer to associate an item(s) included in the part list with an item(s) included in the process list.

A program according to a third aspect causes a computer to perform processing for: holding a part list representing a part(s) included in a product; holding a process list representing a process(es) included in a process sequence(s); and associating an item(s) included in the part list with an item(s) included in the process list. This program can be provided as a program product stored in a non-transitory computer-readable storage medium.

### ADVANTAGEOUS EFFECTS OF INVENTION

The process design support apparatus, the process design support method, and the program according to the above aspects can realize integral management of a BOM (a part list) and a BOP (a process list or a resource list) while enabling designing of the BOP independently from designing of the BOM.

### BRIEF DESCRIPTION OF DRAWINGS

Fig. 1 is a block diagram illustrating an example of a configuration of a process design support apparatus according to an exemplary embodiment.
Fig. 2 is a block diagram illustrating an example of a configuration of a process design support apparatus according to a first exemplary embodiment.
Figs. 3(a) and 3(b) are flowcharts illustrating examples of operations of the process design support apparatus according to the first exemplary embodiment.
Fig. 4 illustrates an example of a manufacturing process of a product.
Figs. 5(a) to 5(c) illustrate examples of a part list, a production view, and a part list generation procedure, respectively, according to an exemplary embodiment.
Figs. 6(a) to 6(c) illustrate examples of a process list, a process view, and a process list generation procedure, respectively, according to an exemplary embodiment.
Figs. 7(a) to 7(c) illustrate examples of a resource list, a resource view, and a resource list generation procedure, respectively, according to an exemplary embodiment.
Fig. 8 illustrates an example of information displayed by the process design support apparatus according to the first exemplary embodiment.
Fig. 9 illustrates an association operation between a product as a dependency source and a process sequence as a dependency destination.
Fig. 10 illustrates an association operation between a process as a dependency source and a part-based configuration as a dependency destination.
Fig. 11 illustrates an association operation between a process as a dependency source and a resource as a dependency destination.
Fig. 12 illustrates an association operation between a part as a dependency source and a resource as a dependency destination.
Fig. 13 illustrates comparative examples 1 and 2.
Fig. 14 is a block diagram illustrating an example of a configuration of a process design support apparatus according to a second exemplary embodiment.
Fig. 15 illustrates an example of information displayed by an impact analysis part in the process design support apparatus according to the second exemplary embodiment.
Fig. 16 is a flowchart illustrating an example of an operation of the process design support apparatus according to the second exemplary embodiment.
Fig. 17 illustrates an impact analysis operation performed by the process design support apparatus according to the second exemplary embodiment.
Figs. 18(a) to 18(c) illustrate an engineering BOM, a manufacturing BOM, and a BOP, respectively.

### DESCRIPTION OF EMBODIMENTS

First, an outline of an exemplary embodiment will be described. The reference characters in the following outline are merely used as examples to facilitate understanding of the present invention, not to limit the present invention to the illustrated modes. An individual connection line between blocks in an individual drawing signifies both one-way and two-way directions. An individual arrow schematically illustrates the principal flow of a signal (data) and does not exclude bidirectionality

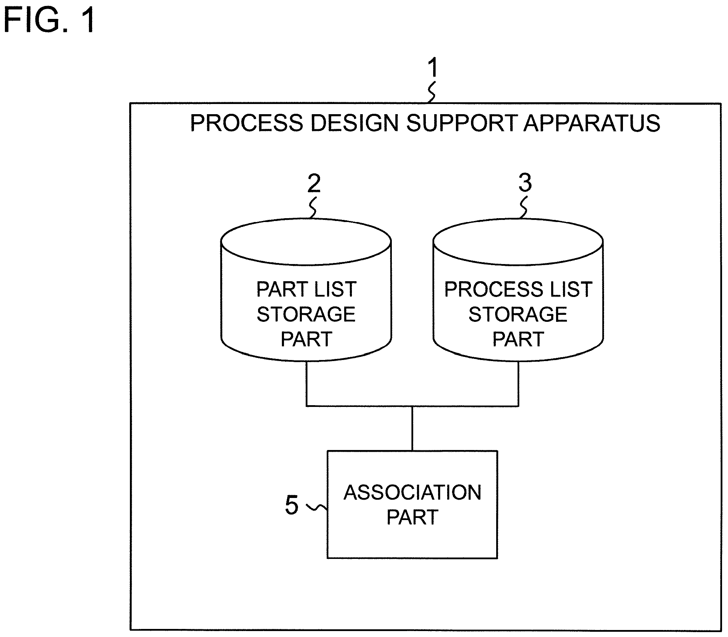

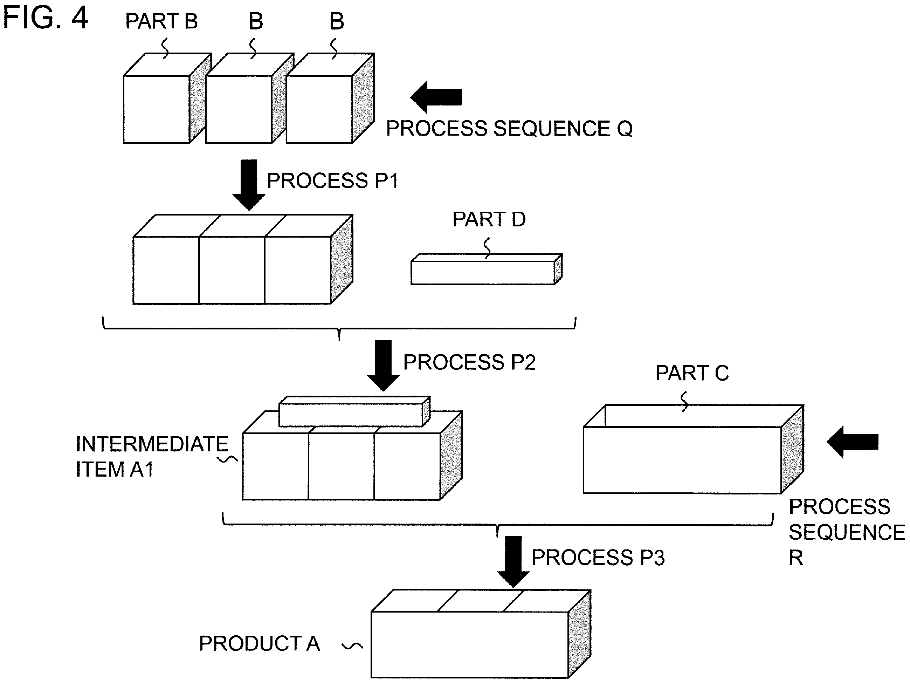

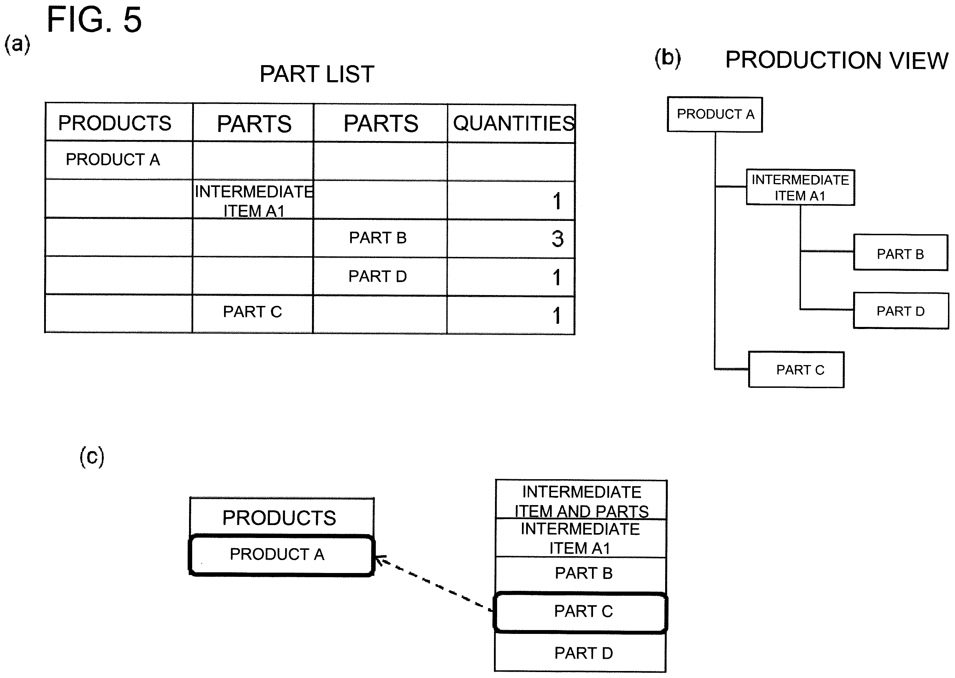

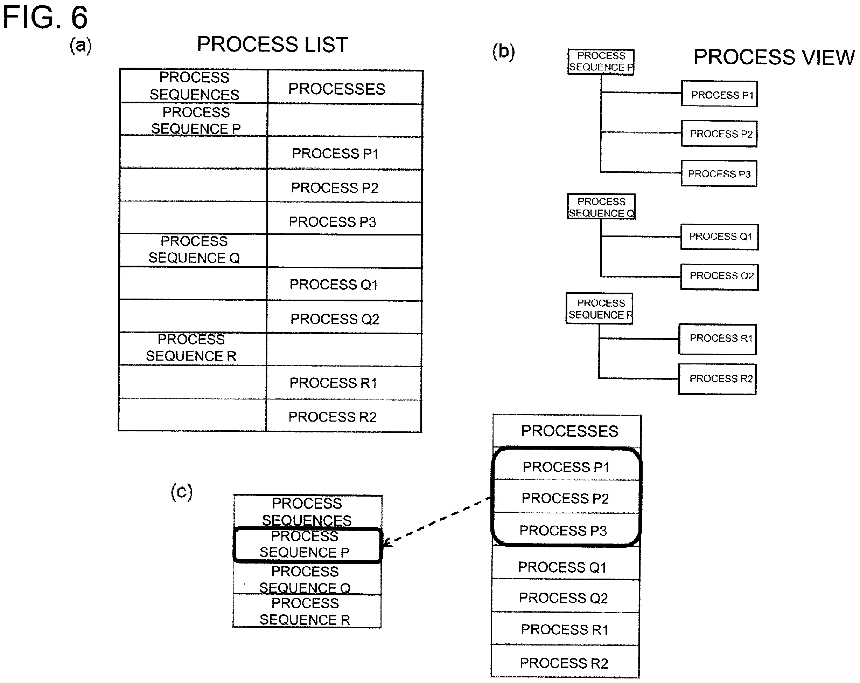

A process design support apparatus according to an exemplary embodiment will be described with reference to drawings. As illustrated in Fig. 1, a process design support apparatus 1 according to an exemplary embodiment includes a part list storage part 2, a process list storage part 3, and an association part 5. The part list storage part 2 holds a part list (for example, Fig. 5(a)) representing a part(s) (for example, parts B and C in Fig. 4) included in a product (for example, a product A in Fig. 4). The process list storage part 3 holds a process list (for example, Fig. 6(a)) representing a process(es) (for example, processes PI to P3, processes Q1 and Q2, and processes R1 and R2 in Fig. 6) included in a process sequence(s) (for example, process sequences P, Q, and R for manufacturing the product A in Fig. 4). The association part 5 associates an item(s) (for example, the product A) included in the part list with an item(s) (for example, the process sequence P) included in the process list.

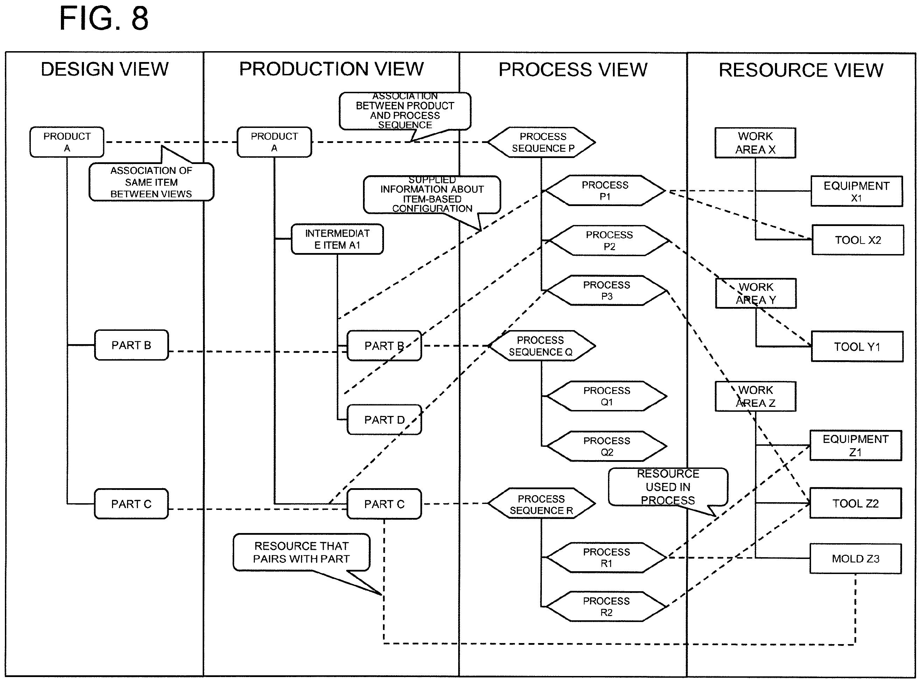

By using the process design support apparatus 1, a BOP (for example, the process list in Fig. 6(a)) can be designed separately from a BOM (for example, the part list in Fig. 5(a)). In addition, a BOM item(s) (or a BOM element(s)) and a BOP item(s), which have been created separately, can be associated with each other (for example, as illustrated in Fig. 8, a product or a part(s) can be associated with a process sequence(s), and a process(es) and a part-based configuration(s) can be associated with each other). Thus, by using the process design support apparatus 1 according to the exemplary embodiment, it is possible to design a BOP independently from a BOM, associate an item(s) included in the BOM with an item(s) included in the BOP, and integrally manage the BOM and the BOP. In addition, by displaying the associations made by the association part 5 of the process design support apparatus 1 as illustrated in Fig. 8, it is possible to easily understand the associations between(among) the product or a part(s) included in the BOM and a process(es) and a resource(s) included in the BOP and the affected range of a design change.

### <Exemplary Embodiment 1>

Next, a process design support apparatus according to a first exemplary embodiment will be described with reference to drawings.

### [Configuration]

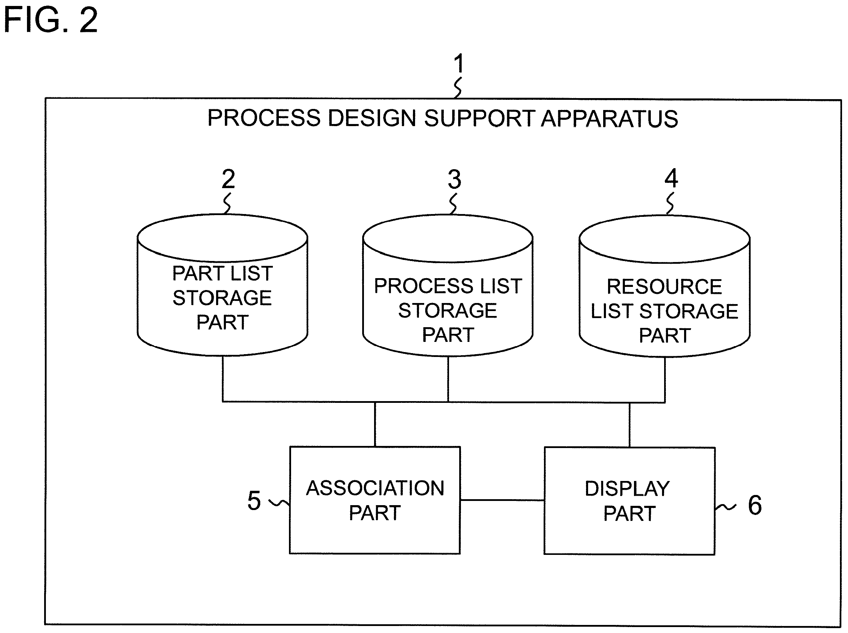

First, a configuration of the process design support apparatus according to the present exemplary embodiment will be described with reference to drawing. As illustrated in Fig. 2, a process design support apparatus 1 according to the present exemplary embodiment includes a part list storage part 2, a process list storage part 3, a resource list storage part 4, an association part 5, and a display part 6.

The part list storage part 2 holds a part list representing a part(s) included in a product. The part list holds the product, the part(s) included in the product, and a part-based configuration(s) of the product based on the part(s) in association with each other. The following example assumes that a product A formed by three parts B and one part C is manufactured via an intermediate item A1 (formed by the parts B and one part D), as illustrated in Fig. 4. In this case, the part list storage part 2 holds the part list illustrated in Fig. 5(a). In this case, the intermediate item is a product obtained halfway through the manufacturing process (the intermediate item is also referred to as an intermediate product or a half-finished product). Namely, the intermediate item is a product that can be held (stored), used, or sold as is for example while not finished yet as an end product. Hereinafter, for simplicity, an intermediate item will be referred to as a "part". In addition, an individual product and an individual part will collectively be referred to as "an item". An individual product is identified by information (a product name, a manufacturing number, etc.) that identifies the corresponding product. In addition, an individual part is identified by information (a part name, a manufacturing number, etc.) that identifies the corresponding intermediate item or part. In contrast, a part-based configuration indicates a lower item included in an upper item and the quantity of the lower item (for example, the number of intermediate items A1, parts C, parts D included in the product A, the number of parts B and parts D included in an intermediate item A1, etc.). Other than the number of elements, a different kind of information (weight, volume, length, composition ratio, etc.) may be used as the quantity.

The process list storage part 3 holds a process list representing a process(es) included in a process sequence(es). The process list holds a process sequence(s) and a process(es) included in the process sequence(s) in association with each other. An individual process sequence is identified by information (a process sequence name, a process sequence number, etc.) that identifies the corresponding process sequence. An individual process is identified by information (a process name, a process number, etc.) that identifies the corresponding process. For example, as illustrated in Fig. 4, when the product A is manufactured via the process sequences P, Q, and R and when the process sequences P, Q, and R include the processes P1 to P3, the processes Q1 and Q2, and the processes R1 and R2, respectively, the process list storage part 3 holds the process list illustrated in Fig. 6(a). In this case, an individual process sequence is formed by one process or a plurality of ordered processes. In the example illustrated in Fig. 4, the individual part B is manufactured by the process sequence Q in which the processes Q1 and Q2 are performed sequentially. Likewise, the individual part C is manufactured by the process sequence R in which the processes R1 and R2 are performed sequentially. In addition, the individual product A is manufactured by the process sequence P in which the processes P1 to P3 are performed sequentially.

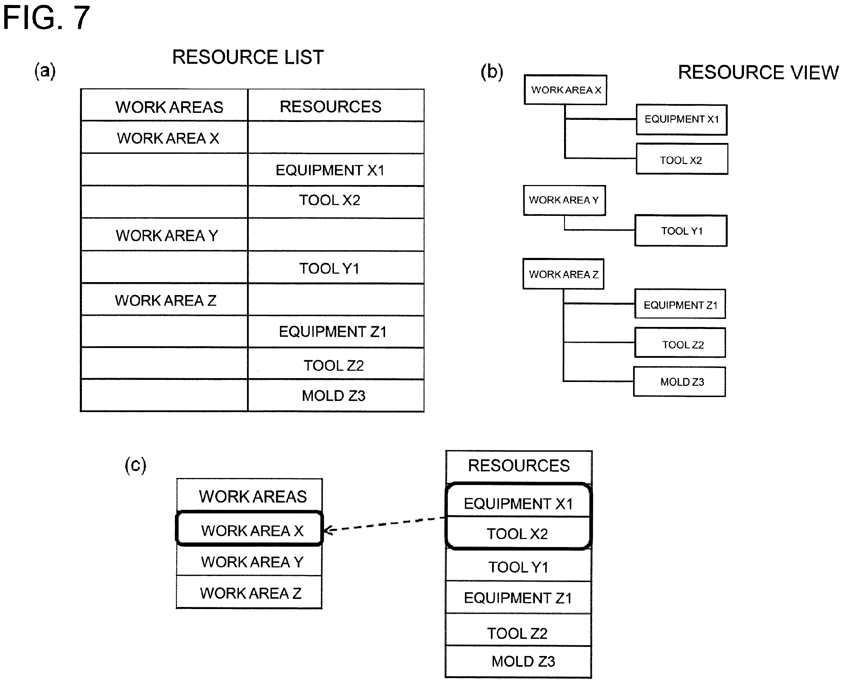

The resource list storage part 4 holds a resource list representing a resource(s) included in a work area(s). The resource list holds a work area(s) and a resource(s) arranged in the work area(s) in association with each other. Herein, a work area is one work section or one of a plurality of work sections at a manufacturing site (a factory, etc.). When a product is manufactured at a plurality of factories, a plurality of work areas may belong to the respective factories. A resource signifies a manufacturing resource included in a work area. Specifically, the resources are equipment, tools (such as jigs), molds, personnel (for example, human resources having certain skills), etc. An individual work area is identified by information (a work area name, a work area number, etc.) that identified the corresponding work area. An individual resource is identified by information (a resource name, a resource number, etc.) that identifies the corresponding resource. When a work area X includes: equipment X1 and a tool X2; a work area Y includes a tool Y1; and a work area Z includes equipment Z1, a tool Z2, a mold Z3, the resource list storage part 4 holds a resource list illustrated in Fig. 7(a).

The association part 5 associates an item(s) included in the part list held by the part list storage part 2, an item(s) included in the process list held by the process list storage part 3, and an item(s) included in the resource list held by the resource list storage part 4 with each other. Among the items included in the part list (for example, Fig. 5(a)), the process list (for example, Fig. 6(a)), and the resource list (for example, Fig. 7(a)), the association part 5 may associate items selected by the user with each other.

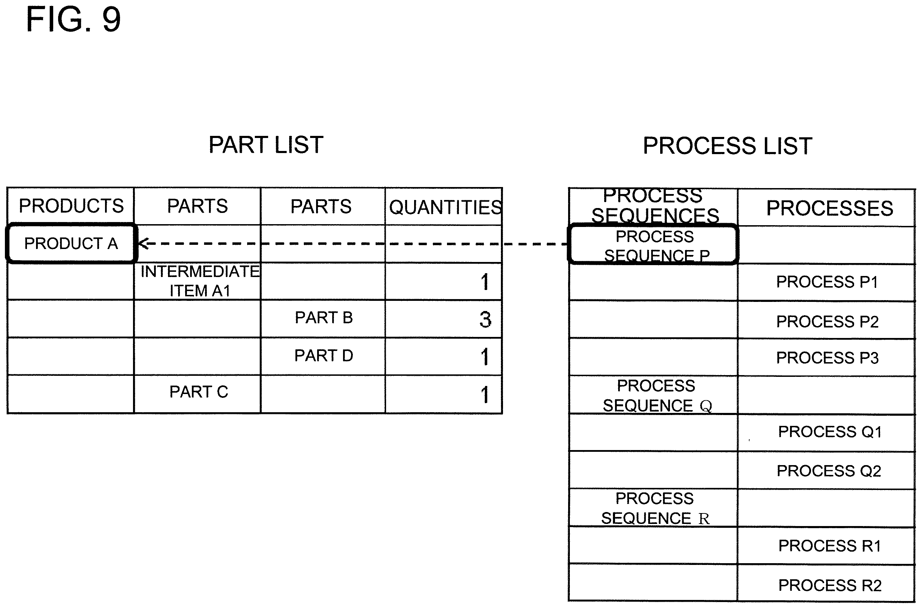

In addition, the user may select a dependency source item(s) and a dependency destination item(s) included in the part list, the process list, and the resource list. In this case, the association part 5 may receive the selected items and set a dependency relationship(s) between(among) the received dependency source item(s) and dependency destination item(s). For example, as illustrated in Fig. 4, when the product A is manufactured by the process sequence P formed by the processes PI to P3, the product A is dependent on the process sequence P (in this case, the product A is the dependency source, and the process sequence P is the dependency destination). In this case, the association part 5 may set a dependency relationship between the product A (the dependency source) and the process sequence P (the dependency destination) when the association part 5 detects that the user has selected the process sequence P included in the process list and dragged and dropped the select process sequence P to the product A included in the part list (see Fig. 9). With this configuration, the user can easily associate items included in different lists with each other.

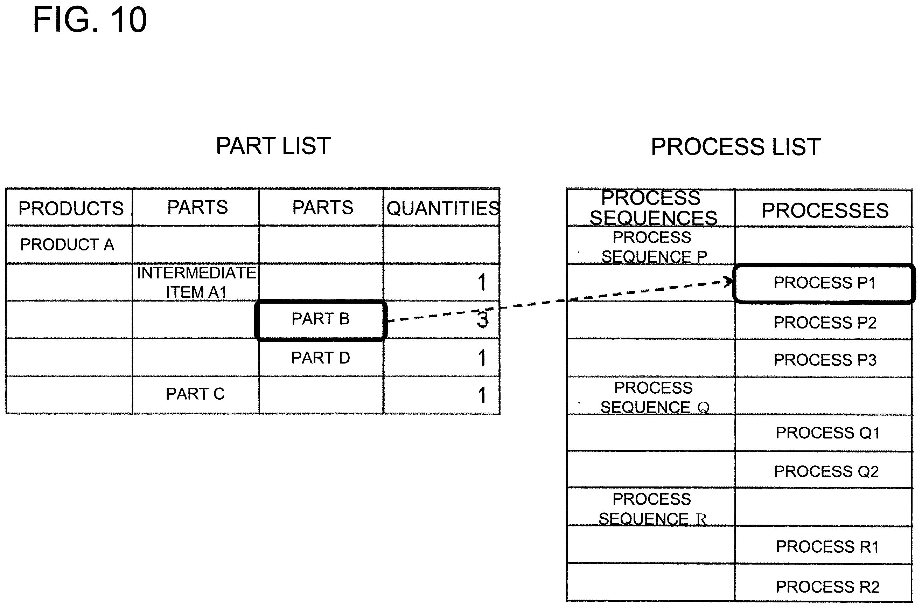

The association part 5 may receive a quantity (also referred to as "supplied information") of a dependency destination item needed by a dependency source item from the user and associate the received quantity with the dependency relationship between the dependency source item and the dependency destination item. For example, as illustrated in Fig. 4, when execution of the process PI presupposes completion of manufacturing of three parts B, the process PI is dependent on the part-based configuration based on the part B (the configuration of the product A based on the part B) (in this case, the process PI is the dependency source, and the part-based configuration based on the part B is the dependency destination). In this case, the association part 5 sets a dependency relationship between the process PI (the dependency source) and the part-based configuration based on the part B (the dependency destination) when the association part 5 detects that the user has selected the part-based configuration based on the part B included in the part list and dragged and dropped the selected part-based configuration based on the part B to the process PI included in the process list (see Fig. 10). The association part 5 may hold the quantity (3, which is the number of parts B in this case) of the part B (the dependency destination item) needed by the process PI (the dependency source item) in association with the dependency relationship between the process P1 and the part-based configuration based on the part B (as the "supplied information about the item-based configuration").

The association part 5 can receive various combinations of dependency source items and dependency destination items from the user. For example, the following combinations are possible:
(a) A case in which the association part 5 receives "a product or a part" as a dependency source item and receives "a process sequence" as a dependency destination item (namely, a case in which a predetermined product or part is manufactured by a predetermined process sequence);
(b) A case in which the association part 5 receives "a process" as a dependency source item and receives "a part" as a dependency destination item-based configuration (namely, a case in which execution of a predetermined process presupposes a predetermined quantity of predetermined parts);
(c) A case in which the association part 5 receives "a process" as a dependency source item and receives "a resource" as a dependency destination item (namely, a case in which a predetermined resource is needed when a predetermined process is performed); and
(d) A case in which the association part 5 receives "a product or a part" as a dependency source item and receives "a resource" as a dependency destination item (namely, a case in which a predetermined resource is needed when a predetermined product or part is manufactured).

The individual association that the association part 5 receives from the user is not limited to only one-on-one association. The association part 5 may associate an item with a plurality of items. Alternatively, the association part 5 may associate a plurality of items with other items. For example, the association part 5 may perform the following association when a process P1a is performed by using two parts B and a process Plb is performed by using one part B, instead of performing the process P1 by using three parts B as illustrated in Fig. 4. Namely, the association part 5 may associate the two processes P1a and P1b as the dependency sources with the part-based configuration based on the part B as the dependency destination. In addition, the association part 5 may hold 2, which is the number of parts B, in association with the dependency relationship between the process P1a and the part-based configuration based on the part B and hold 1, which is the number of parts B, in association with the dependency relationship between the process P1b and the part-based configuration based on the part B, as the "supplied information about the item-based configuration".

When only the association of certain combinations of items is previously set to be allowed, if the user attempts to associate a combination of items other than the set combinations of items, the association part 5 may output an error. For example, when the association part 5 detects an operation in which the user attempts to associate a combination of a dependency source and a dependency destination other than the combinations described in the above (a) to (d), the association part 5 may output an error. In addition, when the user selects an item included in a list, the association part 5 may present an item(s) that can be associated with this item to the user. For example, the association part 5 may display a list(s) including an item(s) that can be associated this item and highlight the item(s) that can be associated in the list(s). With this configuration, even a user(s) who does not have a detailed knowledge of combinable items can appropriately set the association between items.

The display part 6 displays the items included in the part list, the process list, and the resource list in respective trees, for example. For example, the display part 6 hierarchizes the items included in the part list in Fig. 5(a) and displays the hierarchized items in a tree as a production view as illustrated in Fig. 5(b). In addition, the display part 6 hierarchizes the items included in the process list in Fig. 6(b) and displays the hierarchized items in a tree as a process view as illustrated in Fig. 6(b). In addition, the display part 6 hierarchizes the items included in the resource list in Fig. 7(b) and displays the hierarchized items in a tree as a resource view as illustrated in Fig. 7(b). In addition, as illustrated in Fig. 8, the display part 6 connects items, which have been associated with each other by the association part 5, to each other (for example, by a dashed line) and displays the connected items.

### [Operation]

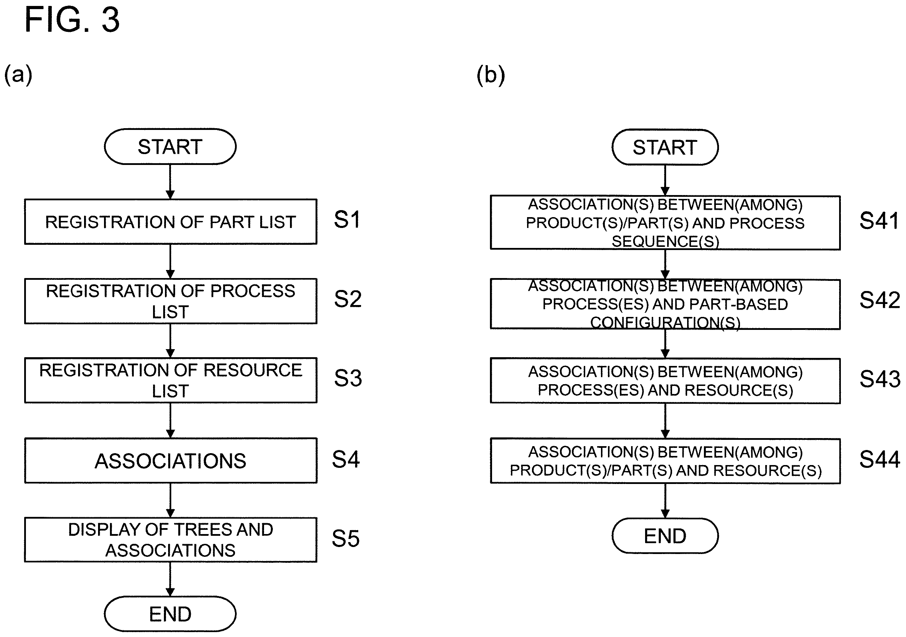

Next, an operation of the process design support apparatus 1 according to the present exemplary embodiment will be described with reference to drawings. Fig. 3(a) is a flowchart illustrating an example of an operation of the process design support apparatus 1 according to the present exemplary embodiment.

Hereinafter, an operation of the process design support apparatus 1 will be described by using the manufacturing process of the product A illustrated in Fig. 4 as an example. As illustrated in Fig. 4, each of the three parts B (for example, members) is manufactured in accordance with the process sequence Q. In contrast, the part C (for example, a container) is manufactured in accordance with the process sequence R, and the product A is manufactured in accordance with the process sequence P including the processes P1 to P3. First, in the process P1, the three parts B are connected to each other. Next, in the process P2, the part D (for example, a handle) is attached to the connected parts B. As a result, the intermediate item A1 is manufactured. Next, in the process P3, the intermediate item A1 is inserted into the part C, and the part D is removed therefrom. As a result, the product A is manufactured.

As illustrated in Fig. 3(a), the part list storage part 2 receives registration of a part list representing a part(s) included in a product(s) from a user (step S1). As illustrated in Fig. 5(c), the part list storage part 2 may receive a product table (the left table in Fig. 5(c)) holding a product (information that identifies a product) and a part table (the right table in Fig. 5(c)) holding an intermediate item(s) or a part(s) (information that identifies an intermediate item(s) or a part(s)) from a user and previously hold these tables. In this case, the part list storage part 2 may generate and hold the part list (see Fig. 5(a)) representing that the product A includes the part C when the part list storage part 2 detects that the user has selected the part C included in the part table and has dragged and dropped the selected part C to the product A included in the product table (see Fig. 5(c)). The part list storage part 2 may receive and hold the quantity (namely, the part-based configuration) based on the part B included in the product A from the user. Herein, the part list storage part 2 holds the part list in Fig. 5(a) based on information inputted by the user. Herein, the product A is formed by the intermediate item A1 and the part C, and the intermediate item A1 is formed by three parts B and one part D. While the part D is included in the intermediate item A1, the part D is not included in the product A as an end product.

Next, the process list storage part 3 receives registration of a process list representing a process(es) included in a process sequence(s) from the user (step S2). As illustrated in Fig. 6(c), the process list storage part 3 may previously receive a process sequence table (the left table in Fig. 6(c)) holding a process sequence(s) (information that identifies a process sequence(s)) and a process table (the right table in Fig. 6(c)) holding a process(es) (information that identifies a process(es)) from the user and hold these tables. In this case, the process list storage part 3 may automatically generate and hold the process list (see Fig. 6(a)) indicating that the process sequence P includes the processes P1 to P3 when the process list storage part 3 detects that the user has selected the processes P1 to P3 included in the process table and dragged and dropped the selected processes P1 to P3 to the process sequence P included in the process sequence table (see Fig. 6(c)). Herein, the process list storage part 3 holds the process list in Fig. 6(a) based on information inputted by the user. As illustrated in Fig. 4, the individual part B is manufactured by the process sequence Q including the processes Q1 and Q2, and the part C is manufactured by the process sequence R including the processes R1 and R2. In addition, the product A is manufactured by the process sequence P including the processes PI to P3.

Next, the resource list storage part 4 receives registration of a resource list representing a resource(s) included in a work area(s) from the user (step S3). As illustrated in Fig. 7(c), the resource list storage part 4 may receive a work area table (the left table in Fig. 7(c)) holding a work area(s) (information that identifies a work area(s)) and a resource table (the right table in Fig. 7(c)) holding a resource(s) (information that identifies a resource(s)) from the user and previously hold these tables. In this case, the resource list storage part 4 may generate and hold a resource list (see Fig. 7(a)) indicating that the work area X includes the equipment X1 and the tool X2 as the resources when the resource list storage part 4 detects that the user has selected the resources (the equipment X1 and the tool X2) included in the resource table and dragged and dropped the selected resources (X1 and X2) to the work area X included in the work area table (see Fig. 7(c)). Herein, the resource list storage part 4 holds the resource list in Fig. 7(a) based on information inputted by the user. As illustrated in Fig. 7(a), the work area X includes the equipment X1 and the tool X2, the work area Y includes the tool Y1, and the work area Z includes the equipment Z1, the tool Z2, and the mold Z3.

The registration order of the part list, the process list, and the resource list in steps S1 to S3 in Fig. 3(a) is not limited to any particular order.

Next, the association part 5 associates an item(s) included in the part list (Fig. 5(a)) held by the part list storage part 2, an item(s) included in the process list (Fig. 6(a)) held by the process list storage part 3, and an item(s) included in the resource list (Fig. 7(a)) held by the resource list storage part 4 with each other in accordance with selection by the user (step S4). The association operation in step S4 will be described below with reference to Fig. 3(b).

Next, the display part 6 displays the items included in the part list (Fig. 5(a)), the process list (Fig. 6(a)), and the resource list (Fig. 7(a)) in respective trees, as a production view, a process view, and a resource view illustrated in Fig. 8 (step S5). In addition, as illustrated in Fig. 8, the display part 6 connects items, which have been associated with each other by the association part 5, to each other (for example, by a dashed line) and displays the connected items (step S5).

Next, detailed operations of the "association" in step S4 in Fig. 3(a) will be described.

As illustrated in Fig. 3(b), when a predetermined product or part is manufactured by a predetermined process sequence, the association part 5 associates the product/part (the dependency source) with the process sequence (the dependency destination) based on an operation by the user (step S41). Herein, as illustrated in Fig. 4, the product A is manufactured by the process sequence P including the processes PI to P3. As illustrated in Fig. 9, the user selects the process sequence P included in the process list and drags and drops the selected process sequence P to the product A included in the part list. When the association part 5 detects this operation by the user, the association part 5 determines that the product A is dependent on the process sequence P and sets a dependency relationship between the product A (the dependency source) and the process sequence P (the dependency destination). Likewise, based on an operation by the user, the association part 5 associates the part B (the dependency source) and the process sequence Q (the dependency destination) and associates the part C (the dependency source) with the process sequence R (the dependency destination).

Next, when execution of a predetermined process(es) presupposes a predetermined quantity(ies) of a predetermined part(s), based on an operation by the user, the association part 5 associates the process(es) (the dependency source(s)) with the part-based configuration(s) (the dependency destination(s)) (step S42). Herein, as illustrated in Fig. 4, execution of the process P1 presupposes completion of manufacturing of three parts B. As illustrated in Fig. 10, the user selects the part B included in the part list and drags and drops the selected part B to the process P1 included in the process list (see Fig. 10). When the association part 5 detects this operation by the user, the association part 5 determines that the process PI is dependent on the part-based configuration based on the part B and sets a dependency relationship between the process PI (the dependency source) and the part-based configuration based on the part B (the dependency destination). The association part 5 may hold the quantity (3 as the number of parts B) of the part-based configuration (the dependency destination item) based on the part B needed by the process PI (the dependency source item) in association with the dependency relationship between the process P1 and the part-based configuration based on the part B (as the "supplied information about the item-based configuration"). Likewise, based on an operation by the user, the association part 5 associates the process P2 (the dependency source) with the part-based configuration (the dependency destination) based on the part D and associates the process P3 (the dependency source) with the part-based configuration (the dependency destination) based on the part C.

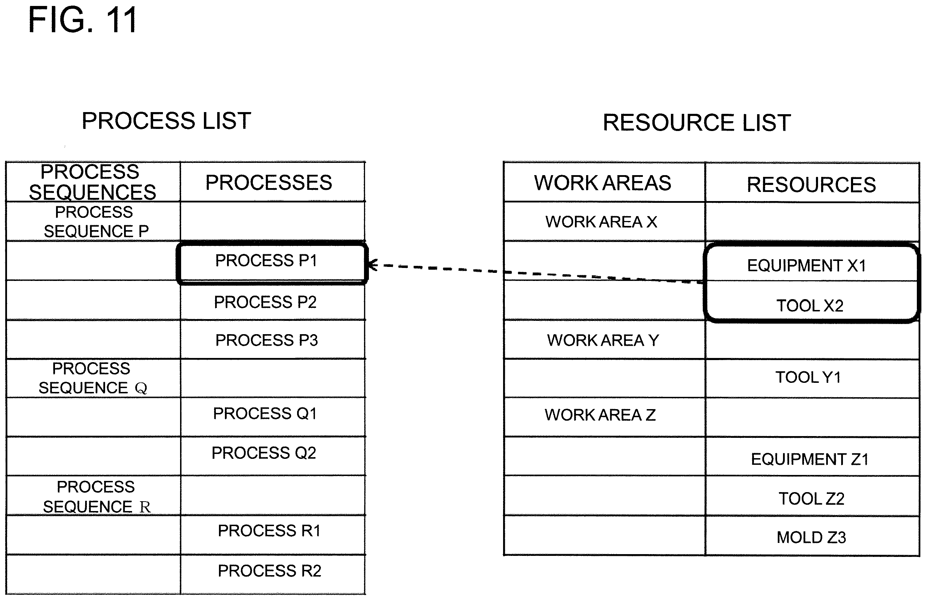

Next, when execution of a predetermined process(es) presupposes use of a predetermined resource(s), based on an operation by the user, the association part 5 associates the process(es) (the dependency source(s)) with the resource(s) (the dependency destination(s)) (step S43). Herein, when the process P1 is performed, the equipment X1 and the tool X2 in the work area X are used. As illustrated in Fig. 11, the user selects the equipment X1 and the tool X2 included in the resource list and drags and drops the selected resources to the process P1 included in the process list (see Fig. 11). When the association part 5 detects this operation by the user, the association part 5 determines that the process P1 is dependent on these resources, namely, the equipment X1 and the tool X2, and sets a dependency relationship between the process P1 (the dependency source) and "the equipment X1 and the tool X2" (the dependency destinations). Likewise, based on an operation by the user, the association part 5 associates the process P2 (the dependency source) with the tool Y1 (the dependency destination), associates the process P3 (the dependency source) with the tool Z2 (the dependency destination), associates the process R1 (the dependency source) with "the equipment Z1 and the mold Z3" (the dependency destinations), and associates the process R2 (the dependency source) with the tool Z2 (the dependency destination).

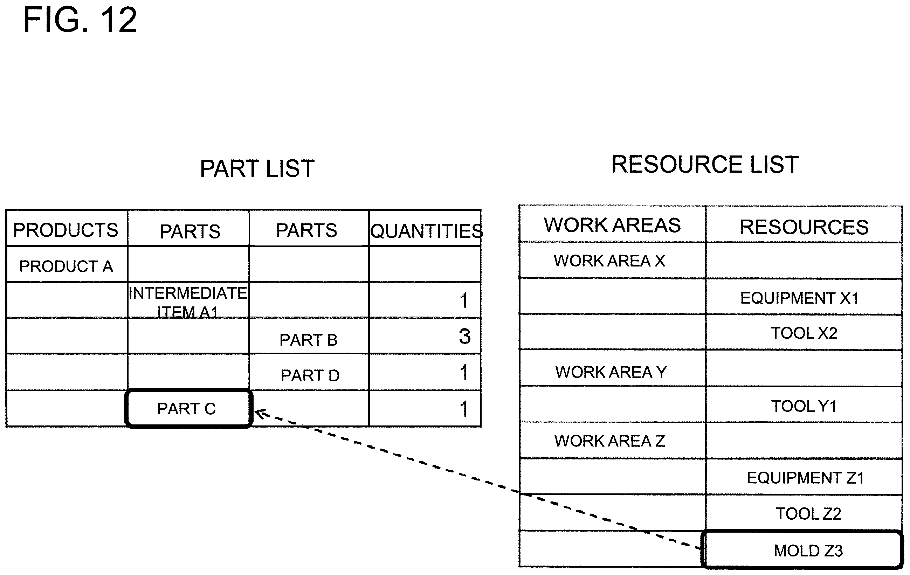

Next, when manufacturing a predetermined product(s) or part(s) needs a predetermined resource(s), based on an operation by the user, the association part 5 associates the product/part(s) (the dependency source(s)) with the resource(s) (the dependency destination(s)) (step S44). Herein, manufacturing the part C presupposes the dedicated mold Z3 included in the work area Z. As illustrated in Fig. 12, the user selects the mold Z3 included in the resource list and drags and drops the selected resource to the part C included in the part list (see Fig. 12). When the association part 5 detects this operation by the user, the association part 5 determines that the part C is dependent on this resource, namely, the mold Z3, and sets a dependency relationship between the part C (the dependency source) and the mold Z3 (the dependency destination).

The order of steps S41 to S44 in Fig. 3 is not limited to any particular order. In addition, the associations performed by the association part 5 is not limited to the four kinds of association in steps S41 to S44. Namely, other items may be associated with each other.

Fig. 8 illustrates an example of information displayed by the display part 6. The display part 6 displays an individual association among a product or a part, a process sequence or a process, and a resource made by the association part 5 by using a dashed line. The use can understand, for example, that the product A is manufactured by the process sequence P and that the parts B and C are manufactured by the process sequences Q and R, respectively, by viewing Fig. 8. In addition, the display part 6 displays an individual association between a process and a part-based configuration made by the association part 5 by using a dashed line. The user can understand, for example, that execution of the processes P1 to P3 presupposes existence (completion) of manufacturing of the parts B, D, and C, respectively, by viewing Fig. 8. In addition, the display part 6 displays an individual association between a process and a resource made by the association part 5 by using a dashed line. The user can understand, for example, that the process P1 is performed by using the equipment X1 and the tool X2, the process P2 is performed by using the tool Y1, and the process P3 is performed by using the tool Z2 by viewing Fig. 8. In addition, the user can understand that the process R1 is performed by using the equipment Z1 and the mold Z3 and that the process R2 is performed by using the tool Z2. In addition, the display part 6 displays an individual association between a product or a part and a resource made by the association part 5 by using a dashed line. The user can understand, for example, that the part C is manufactured by using the mold Z3 by viewing Fig. 8.

### [Advantageous Effects]

After the process design support apparatus 1 according to the present exemplary embodiment receives registration of a BOM (for example, the part list in Fig. 5(a)) and a BOP (for example, the process list in Fig. 6(a) or the resource list in Fig. 7(a)) from the user, the process design support apparatus 1 receives an association between an item included in the BOM and an item included in the BOP from the user and displays the received association (for example, Fig. 8). With this configuration, the user can design a BOP (a process list, a resource list, etc.) independently from a BOM (a part list). In addition, even when a BOM is not completed in advance, the user can start to design a process list or a resource list ahead of schedule. In addition, with the process design support apparatus 1, an item(s) included in a BOM and an item(s) included in a BOP can be associated with each other and integrally managed. Thus, according to the present exemplary embodiment, it is possible to realize integral management of a BOM (a part list) and a BOP (a process list or a resource list) while enabling designing of the BOP independently from the BOM.

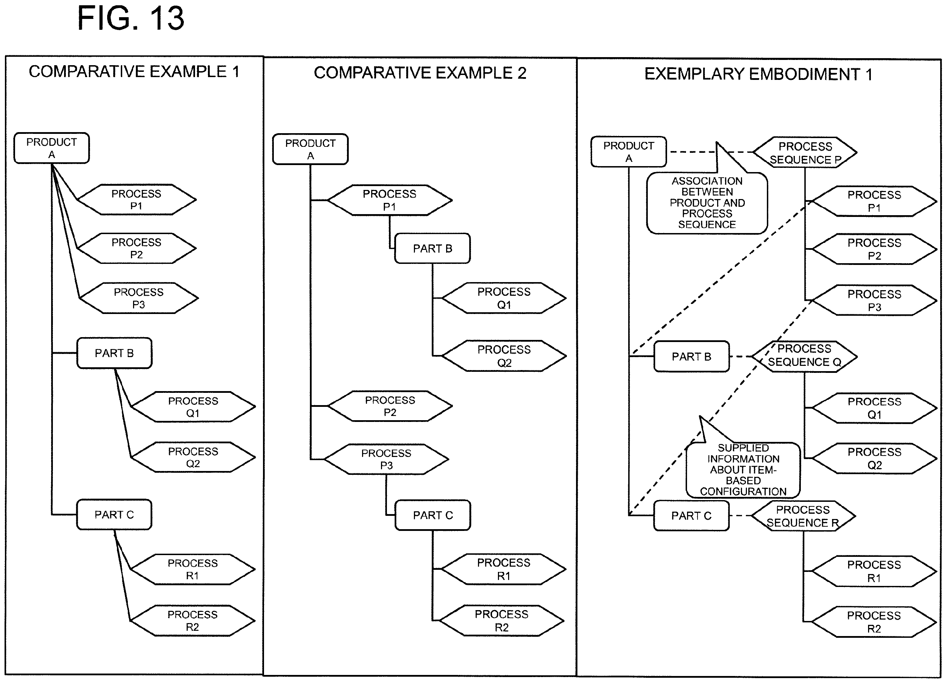

Next, advantageous effects of the process design support apparatus 1 according to the present exemplary embodiment will be described in more detail by comparing the present exemplary embodiment with comparative examples. Fig. 13 illustrates the comparison between the present exemplary embodiment and comparative examples 1 and 2.

In comparative examples 1 and 2 illustrated on the left side and in the middle in Fig. 13, the methods for manufacturing the product and the parts (the processes and the resources such as the equipment based on the specifications) are managed as information added to the product and parts in a part list. Comparative examples 1 and 2 are advantageous in that the user can easily understand the association between the product or a part and a process. However, according to comparative examples 1 and 2, it is difficult to manage the BOP independently from the BOM (the part list). Namely, it is difficult to design the process list or the resource list ahead of schedule, irrespective of the presence or absence of a part list. In addition, according to comparative examples 1 and 2, since the processes are incorporated in the part list, it is difficult to use the process list or the resource list for the part list of another product. In addition, according to comparative examples 1 and 2, it is difficult to associate a plurality of process sequences with a single product (the part list of a single product).

In contrast, according to the present exemplary embodiment, after a BOM (a part list) and a BOP (a process list and a resource list) are separately designed and a hierarchical relationship (a parent-child relationship) is established for each of the part list, the process list, and the resource list, items included in these lists are associated with each other (see Fig. 8 and the right side in Fig. 13). With this configuration, the BOP can be integrally managed independently from the BOM. Thus, standardization of the manufacturing process can be achieved, and the process list or the resource list can easily be used for another product (the part list of another product). In addition, by managing the BOP independently from the part list (BOM), even when the part list is not completed yet, the process list or the resource list can be designed ahead of schedule. In addition, according to the present exemplary embodiment, since the process list and the resource list are managed separately from the part list, a plurality of items in the process list or a plurality of items in the part list can be associated with a certain product (the part list of a certain product). Thus, it is possible to easily manage the line difference (internal manufacturing that uses a plurality of manufacturing lines) and internal and external manufacturing (a combination of internal manufacturing and outsourcing).

### <Exemplary Embodiment 2>

Next, a process design support apparatus according to a second exemplary embodiment will be described with reference to drawings.

### [Configuration]

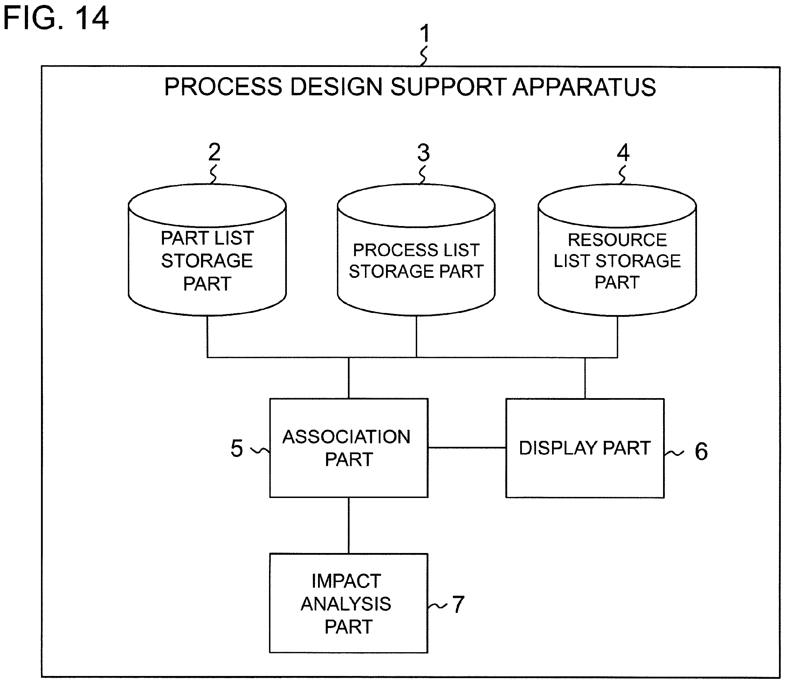

Fig. 14 is a block diagram illustrating an example of a configuration of a process design support apparatus according to the present exemplary embodiment. As illustrated in Fig. 14, a process design support apparatus 1 according to the present exemplary embodiment includes a part list storage part 2, a process list storage part 3, a resource list storage part 4, an association part 5, a display part 6, and an impact analysis part 7. Namely, the process design support apparatus 1 according to the present exemplary embodiment includes the impact analysis part 7 in addition to the elements of the process design support apparatus 1 according to the first exemplary embodiment (Fig. 2).

When a certain item included in the part list, the process list, or the resource list is changed, the impact analysis part 7 extracts a different item(s) affected by this change based on the associations by the association part 5. As described in the first exemplary embodiment, the association part 5 holds items selected by the user among the items included in the part list (for example, Fig. 5(a)), the process list (for example, Fig. 6(a)), and the resource list (for example, Fig. 7(a)) in association with each other. For example, as illustrated in Fig. 11, when the process P1 is associated with the equipment X1 and the tool X2 by the association part 5, if the tool X2 malfunctions, the impact analysis part 7 extracts the process PI based on the corresponding association. In contrast, as illustrated in Fig. 12, when the part C is associated with the mold Z3 by the association part 5, if a design change is made to the part C, the impact analysis part 7 extracts the mold Z3 based on the corresponding association.

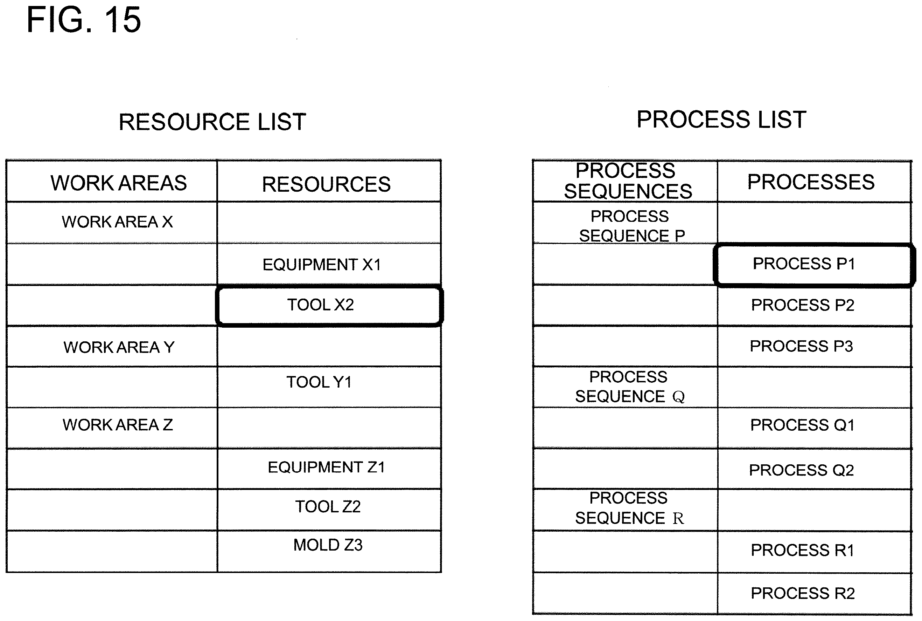

The impact analysis part 7 may extract not only items directly associated by the association part 5 but also items indirectly associated by the association part 5. In addition, the impact analysis part 7 may display a list of extracted items. The impact analysis part 7 may display a list including an item to which a change has been made (a design change, a malfunction, or the like) and a list including an item(s) directly affected by the change side by side. In this case, the impact analysis part 7 may highlight the changed item and the affected item(s). For example, when the process P1 is associated with the equipment X1 and the tool X2 by the association part 5, if the tool X2 malfunctions, as illustrated in Fig. 15, the impact analysis part 7 may display the resource list and the process list and highlight the tool X2 and the process P1 in these lists.

### [Operation]

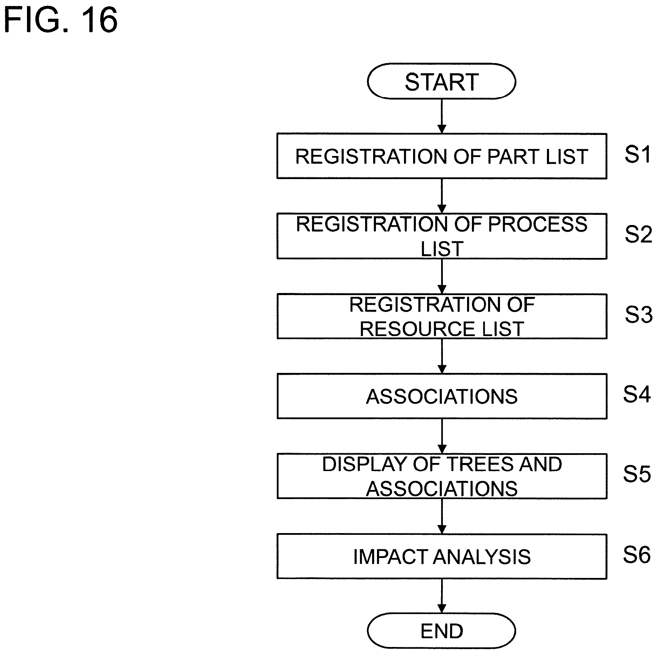

Next, an operation of the process design support apparatus 1 according to the present exemplary embodiment will be described with reference to drawings. Fig. 16 is a flowchart illustrating an example of an operation of the process design support apparatus 1 according to the present exemplary embodiment.

Hereinafter, an operation of the process design support apparatus 1 will be described by using the manufacturing process of the product A illustrated in Fig. 4 as an example. The operations in steps S1 to S5 in Fig. 16 are the same as the operations in steps S1 to S5 in Fig. 3(a) according to the first exemplary embodiment. The following description assumes that the associations as indicated by the dashed lines in Fig. 8 have already been made by the registration operations (steps S1 to S3) of the part list (Fig. 5(a)), the process list (Fig. 6(a)), and the resource list (Fig. 7(a)) and the association operations (see step S4 and Figs. 9 to 12) performed by the association part 5.

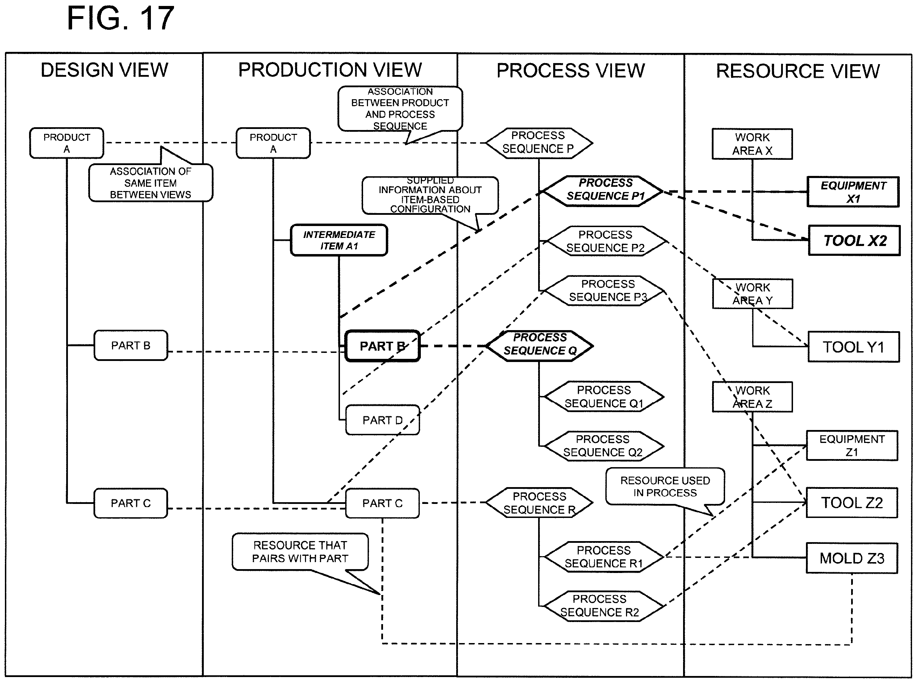

In this case, when a design change is made to the part B and when the impact analysis part 7 receives the change of the part B from the user, the impact analysis part 7 refers to the associations made by the association part 5 (in this case, the associations indicated by the dashed lines in Fig. 8) and determines the other items affected by the change. As illustrated in Fig. 8, when a design change is made to the part B, the intermediate item A1, the process P1, the equipment X1, the tool X2, the process sequence Q, etc. could be affected directly or indirectly. Thus, the impact analysis part 7 presents the intermediate item A1, the process P1, the equipment X1, the tool X2, and the process sequence Q to the user. In addition, the impact analysis part 7 may instruct the display part 6 to highlight the items affected (directly or indirectly) by the design change on the part B (for example, change the display mode by using a color, a font, or the like), as illustrated in Fig. 17. In addition, the impact analysis part 7 may notify a manager or a person in charge of the affected items (for example, the resources) of the design change.

### [Advantageous Effects]

The process design support apparatus 1 according to the present exemplary embodiment provides the same advantageous effects as those provided by the process design support apparatus 1 according to the first exemplary embodiment. In addition, according to the present exemplary embodiment, when a design change or a malfunction occurs, the impact analysis part 7 can determine not only the corresponding part but also a process(es), equipment, etc. that are affected. Thus, when a new product is brought to market or a malfunction occurs, it is possible to quickly perform tracing including the parts, the processes, and the resources and respond to customer requests.

### <Variations>

In the BOM (for example, the part list illustrated in Fig. 5(a)) and the BOP (for example, the process list illustrated in Fig. 6(a) or the resource list illustrated in Fig. 7(a)) according to the above exemplary embodiments, the versions of the product, the parts, the process sequences, the processes, the work areas, and the resources may be registered. In this case, when the association part 5 associates an item(s) included in the part list held by the part list storage part 2, an item(s) included in the process list held by the process list storage part 3, and an item(s) included in the resource list held by the resource list storage part 4 with each other, the association part 5 may associate items of the same version with each other. The association part 5 may associate items of different versions with each other. The association part 5 may associate items of any version without distinguishing the versions. The association part 5 may associate items of a certain version or a plurality of versions.

As described above, in addition to the above information, by registering a version(s) in a BOM (a part list) and a BOP (a process list or a resource list), even when a design change is made to a part or a process, the BOMs and the BOPs before and after the change can be integrally managed. In addition, with this configuration, since the association part 5 associates a product with the process sequences and the resources of both old and new versions, for example, when a single kind of product is manufactured in large numbers, some products can be manufactured by using a process sequence(s) and a resource(s) of the old version, and the other products can be manufactured by using a process sequence(s) and a resource(s) of the new version. Likewise, since the association part 5 associates products of the old and new versions with a process sequence(s) or a resource(s) of a certain version, the products of the old and new versions can be manufactured by using the same process sequence(s) and resource(s).

### REFERENCE SIGNS LIST

- 1: process design support apparatus
- 2: part list storage part
- 3: process list storage part
- 4: resource list storage part
- 5: association part
- 6: display part
- 7: impact analysis part
- A: product
- A1: intermediate item
- B to D: part
- P to R: process sequence
- P1 to P3, Q1, Q2, R1, R2: process
- X to Z: work area
- X1, Z1: equipment
- X2, Y1, Z2: tool
- Z3: mold

## Claims

1. A process design support apparatus, comprising:
a part list storage part that holds a part list representing a part(s) included in a product;
a process list storage part that holds a process list representing a process(es) included in a process sequence(s); and
an association part that associates an item(s) included in the part list with an item(s) included in the process list,
wherein item(s) in the process list and a part-based configuration(s) of the item(s) in the part list are associated with each other.

2. The process design support apparatus according to claim 1; wherein the association part associates items selected by a user with each other, at least one of the items being included in the part list and at least another one of the items being included in the process list.

3. The process design support apparatus according to claim 2; wherein the association part receives a dependency source item(s) included in one of the part list and the process list and a dependency destination item(s) included in the other one of the lists from a user and sets a dependency relationship between(among) the received items.

4. The process design support apparatus according to claim 3; wherein, when a combination of a dependency source item(s) and a dependency destination item(s) received from a user is a predetermined combination, the association part sets a dependency relationship between(among) the received items.

5. The process design support apparatus according to claim 3 or 4; wherein, when the user drags and drops a first item included in a first list, which corresponds to the part list or the process list, to a second item included in a second list, the association part sets one of the first item and the second item as a dependency source item and the other item as a dependency destination item.

6. The process design support apparatus according to any one of claims 3 to 5; wherein the association part receives a quantity(ies) of the dependency destination item(s) needed by the dependency source item(s) from a user and associates the received quantity(ies) with the dependency relationship(s) set between(among) the dependency source item(s) and the dependency destination item(s).

7. The process design support apparatus according to any one of claims 1 to 6;
wherein the part list holds a product, a part(s) included in the product, and the part-based configuration(s) of the product based on the part(s) in association with each other; and/or
wherein the process list holds a process sequence(s) and a process(es) included in the process sequence(s) in association with each other.

8. The process design support apparatus according to claim 7; wherein the association part receives, as an associable combination of a dependency source item and a dependency destination item, at least one of: a combination of a product or a part included in the part list and a process sequence included in the process list; and a combination of a process included in the process list and the part-based configuration included in the part list, from a user.

9. The process design support apparatus according to any one of claims 1 to 8, comprising an impact analysis part that extracts, when a change is made to an item included in the part list or the process list, a different item(s) affected by the change, based on the association by the association part.

10. The process design support apparatus according to any one of claims 1 to 9, comprising a display part that displays the items included in the part list and the items included in the process list in respective trees and displays the items associated by the association part with each other by connecting the items to each other.

11. The process design support apparatus according to claim 1, comprising:
a resource list storage part that holds a resource list representing a resource(s) included in a work area(s);
wherein the association part associates an item(s) included in the part list or the process list with an item(s) included in the resource list.

12. A process design support method, comprising steps of:
causing a computer to hold a part list representing a part(s) included in a product;
causing the computer to hold a process list representing a process(es) included in a process sequence(s); and
causing the computer to associate an item(s) included in the part list with an item(s) included in the process list,
wherein item(s) in the process list and a part-based configuration(s) of the item(s) in the part list are associated with each other.

13. A program, causing a computer to perform processing for:
holding a part list representing a part(s) included in a product;
holding a process list representing a process(es) included in a process sequence(s); and
associating an item(s) included in the part list with an item(s) included in the process list,
wherein item(s) in the process list and a part-based configuration(s) of the item(s) in the part list are associated with each other.

## Patentansprüche

1. Prozessdesignunterstützungsvorrichtung mit:
einem Stücklistenspeicherabschnitt, der eine Stückliste speichert, die ein Teil (Teile) darstellt, das (die) in einem Produkt enthalten ist (sind);
einem Prozesslistenspeicherabschnitt, der eine Prozessliste speichert, die einen Prozess (Prozesse) darstellt, der (die) in einer Prozesssequenz (Prozesssequenzen) enthalten ist (sind); und
einem Zuordnungsabschnitt, der ein Element (Elemente), das (die) in der Stückliste enthalten ist (sind), einem Element (Elementen) zuordnet, das (die) in der Prozessliste enthalten ist (sind),
wobei ein Element (Elemente) in der Prozessliste und eine teilebasierte Konfiguration (teilebasierte Konfigurationen) des einen Elements (der Elemente) in der Stückliste einander zugeordnet sind.

2. Prozessdesignunterstützungsvorrichtung nach Anspruch 1, wobei der Zuordnungsabschnitt durch einen Benutzer ausgewählte Elemente einander zuordnet, wobei mindestens eines der Elemente in der Stückliste enthalten ist und mindestens ein anderes der Elemente in der Prozessliste enthalten ist.

3. Prozessdesignunterstützungsvorrichtung nach Anspruch 2, wobei der Zuordnungsabschnitt ein Abhängigkeitsquellenelement (Abhängigkeitsquellenelemente), das (die) in einer Liste unter der Stückliste und der Prozessliste enthalten ist (sind), und ein Abhängigkeitszielelement (Abhängigkeitszielelemente), das (die) in der anderen der Listen enthalten ist (sind), von einem Benutzer empfängt und eine Abhängigkeitsbeziehung zwischen (unter) den empfangenen Elementen festlegt.

4. Prozessdesignunterstützungsvorrichtung nach Anspruch 3, wobei, wenn eine Kombination von einem Abhängigkeitsquellenelement (Abhängigkeitsquellenelementen) und einem Abhängigkeitszielelement (Abhängigkeitszielelementen), die von einem Benutzer empfangen werden, eine vorgegebene Kombination ist, der Zuordnungsabschnitt eine Abhängigkeitsbeziehung zwischen (unter) den empfangenen Elementen festlegt.

5. Prozessdesignunterstützungsvorrichtung nach Anspruch 3 oder 4, wobei, wenn der Benutzer ein erstes Element, das in einer ersten Liste enthalten ist, die der Stückliste oder der Prozessliste entspricht, durch Drag & Drop zu einem zweiten Element zieht und ablegt, das in einer zweiten Liste enthalten ist, der Zuordnungsabschnitt ein Element unter dem ersten Element und dem zweiten Element als ein Abhängigkeitsquellenelement und das andere Element als ein Abhängigkeitszielelement festlegt.

6. Prozessdesignunterstützungsvorrichtung nach einem der Ansprüche 3 bis 5, wobei der Zuordnungsabschnitt eine Menge (Mengen) des einen Abhängigkeitszielelements (der Abhängigkeitszielelemente), das (die) durch das (die) Abhängigkeitszielelement(e) benötigt wird (werden), von einem Benutzer empfängt und die empfangene(n) Menge(n) der (den) Abhängigkeitsbeziehung(en) zuordnet, die zwischen (unter) dem (den) Abhängigkeitsquellenelement(en) und dem (den) Abhängigkeitszielelement(en) festgelegt ist (sind).

7. Prozessdesignunterstützungsvorrichtung nach einem der Ansprüche 1 bis 6,
wobei die Stückliste ein Produkt, ein Teil (Teile), das (die) im Produkt enthalten ist (sind), und die teilebasierte Konfiguration (teilebasierten Konfigurationen) des Produkts basierend auf dem (den) Teil (Teilen) in Zuordnung zueinander speichert, und/oder
wobei die Prozessliste eine Prozesssequenz (Prozesssequenzen) und einen Prozess (Prozesse), der (die) in der (den) Prozesssequenz (Prozesssequenzen) enthalten ist (sind), in Zuordnung zueinander speichert.

8. Prozessdesignunterstützungsvorrichtung nach Anspruch 7, wobei der Zuordnungsabschnitt als eine zuordenbare Kombination eines Abhängigkeitsquellenelements und eines Abhängigkeitszielelements mindestens eine der folgenden Kombinationen: eine Kombination eines Produkts oder eines Teils, das in der Stückliste enthalten ist, und einer Prozesssequenz, die in der Prozessliste enthalten ist; und eine Kombination eines Prozesses, der in der Prozessliste enthalten ist, und der teilebasierten Konfiguration, die in der Stückliste enthalten ist, von einem Benutzer empfängt.

9. Prozessdesignunterstützungsvorrichtung nach einem der Ansprüche 1 bis 8, mit einem Auswirkungsanalyseabschnitt, der, wenn eine Änderung an einem Element vorgenommen wird, das in der Stückliste oder in der Prozessliste enthalten ist, ein anderes Element (andere Elemente), das (die) von der Änderung betroffen ist (sind), basierend auf der Zuordnung durch den Zuordnungsabschnitt extrahiert.

10. Prozessdesignunterstützungsvorrichtung nach einem der Ansprüche 1 bis 9, mit einem Anzeigeabschnitt, der die in der Stückliste enthaltenen Elemente und die in der Prozessliste enthaltenen Elemente in jeweilige Bäume aufteilt und die Elemente, die durch den Zuordnungsabschnitt einander zugeordnet sind, durch Verbinden der Elemente miteinander anzeigt.

11. Prozessdesignunterstützungsvorrichtung nach Anspruch 1, mit:
einem Ressourcenlistenspeicherabschnitt, der eine Ressourcenliste speichert, die eine Ressource (Ressourcen) darstellt, die in einem Arbeitsbereich (Arbeitsbereichen) enthalten ist (sind),
wobei der Zuordnungsabschnitt ein Element (Elemente), das (die) in der Stückliste oder in der Prozessliste enthalten ist (sind), einem Element (Elementen) zuordnet, das (die) in der Ressourcenliste enthalten ist (sind).

12. Prozessdesignunterstützungsverfahren mit den Schritten:
Veranlassen, dass ein Computer eine Stückliste speichert, die ein Teil (Teile) darstellt, das (die) in einem Produkt enthalten ist (sind);
Veranlassen, dass der Computer eine Prozessliste speichert, die einen Prozess (Prozesse) darstellt, der (die) in einer Prozesssequenz (Prozesssequenzen) enthalten ist (sind); und
Veranlassen, dass der Computer ein Teil (Teile), das (die) in der Stückliste enthalten ist (sind), einem Teil (Teilen) zuordnet, das (die) in der Prozessliste enthalten ist (sind),
wobei ein Element (Elemente) in der Prozessliste und eine teilebasierte Konfiguration (teilebasierte Konfigurationen) des Elements (der Elemente) in der Stückliste einander zugeordnet sind.

13. Programm, das einen Computer veranlasst, eine Verarbeitung auszuführen zum:
Speichern einer Stückliste, die ein Teil (Teile) darstellt, das (die) in einem Produkt enthalten ist (sind);
Speichern einer Prozessliste, die einen Prozess (Prozesse) darstellt, der (die) in einer Prozesssequenz (in Prozesssequenzen) enthalten ist (sind); und
Zuordnen eines Elements (von Elementen), das (die) in der Stückliste enthalten ist (sind), zu einem Element (Elementen), das (die) in der Prozessliste enthalten ist (sind),
wobei ein Element (Elemente) in der Prozessliste und eine teilebasierte Konfiguration (teilebasierte Konfigurationen) des Elements (der Elemente) in der Stückliste einander zugeordnet sind.

## Revendications

1. Appareil d'aide à la conception de processus, comprenant :
une partie de stockage de liste de pièces qui comporte une liste de pièces représentant une ou plusieurs pièces comprises dans un produit ;
une partie de stockage de liste de processus qui comporte une liste de processus représentant un ou plusieurs processus compris dans une ou plusieurs séquences de processus ; et
une partie d'association qui associe un ou plusieurs items compris dans la liste de pièces à un ou plusieurs items compris dans la liste de processus,
dans lequel un ou plusieurs items dans la liste de processus et une ou plusieurs configurations basées sur les pièces des un ou plusieurs items dans la liste de pièces sont associés les uns aux autres.

2. Appareil d'aide à la conception de processus selon la revendication 1 ; dans lequel la partie d'association associe des items sélectionnés par un utilisateur les uns aux autres, au moins l'un des items étant compris dans la liste de pièces et au moins un autre des items étant compris dans la liste de processus.

3. Appareil d'aide à la conception de processus selon la revendication 2 ; dans lequel la partie d'association reçoit un ou plusieurs items de source de dépendance compris dans l'une de la liste de pièces et de la liste de processus et un ou plusieurs items de destination de dépendance compris dans l'autre des listes depuis un utilisateur et définit une relation de dépendance entre (parmi) les items reçus.

4. Appareil d'aide à la conception de processus selon la revendication 3 ; dans lequel, lorsqu'une combinaison d'un ou de plusieurs items de source de dépendance et d'un ou de plusieurs items de destination de dépendance reçus depuis un utilisateur est une combinaison prédéterminée, la partie d'association définit une relation de dépendance entre (parmi) les items reçus.

5. Appareil d'aide à la conception de processus selon la revendication 3 ou 4 ; dans lequel, lorsque l'utilisateur fait glisser et dépose un premier item compris dans une première liste, qui correspond à la liste de pièces ou à la liste de processus, sur un deuxième item compris dans une deuxième liste, la partie d'association définit l'un du premier item et du deuxième item comme item de source de dépendance et l'autre item comme item de destination de dépendance.

6. Appareil d'aide à la conception de processus selon l'une quelconque des revendications 3 à 5 ; dans lequel la partie d'association reçoit une ou plusieurs quantités des un ou plusieurs items de destination de dépendance nécessaires pour les un ou plusieurs items de source de dépendance depuis un utilisateur et associe les une ou plusieurs quantités reçues aux une ou plusieurs relations de dépendance définies entre (parmi) les un ou plusieurs items de source de dépendance et les un ou plusieurs items de destination de dépendance.

7. Appareil d'aide à la conception de processus selon l'une quelconque des revendications 1 à 6 ;
dans lequel la liste de pièces comporte un produit, une ou plusieurs pièces comprises dans le produit, et les une ou plusieurs configurations basées sur les pièces du produit basé sur les une ou plusieurs pièces en association les unes avec les autres ; et/ou
dans lequel la liste de processus comporte une ou plusieurs séquences de processus et un ou plusieurs processus compris dans les une ou plusieurs séquences de processus en association les uns avec les autres.

8. Appareil d'aide à la conception de processus selon la revendication 7 ; dans lequel la partie d'association reçoit, sous forme de combinaison associable d'un item de source de dépendance et d'un item de destination de dépendance, au moins l'une parmi : une combinaison d'un produit ou d'une pièce compris dans la liste de pièces et d'une séquence de processus comprise dans la liste de processus ; et une combinaison d'un processus compris dans la liste de processus et de la configuration basée sur les pièces comprises dans la liste de pièces, depuis un utilisateur.

9. Appareil d'aide à la conception de processus selon l'une quelconque des revendications 1 à 8, comprenant une partie d'analyse d'impact qui extrait, lorsqu'un changement est apporté à un item compris dans la liste de pièces ou la liste de processus, un ou plusieurs items différents concernés par le changement, sur la base de l'association par la partie d'association.

10. Appareil d'aide à la conception de processus selon l'une quelconque des revendications 1 à 9, comprenant une partie d'affichage qui affiche les items compris dans la liste de pièces et les items compris dans la liste de processus dans des arborescences respectives et affiche les items associés par la partie d'association les uns avec les autres en reliant les items les uns aux autres.

11. Appareil d'aide à la conception de processus selon la revendication 1, comprenant :
une partie de stockage de liste de ressources qui comporte une liste de ressources représentant une ou plusieurs ressources comprises dans une ou plusieurs zones de travail ;
dans lequel la partie d'association associe un ou plusieurs items compris dans la liste de pièces ou la liste de processus à un ou plusieurs items compris dans la liste de ressources.

12. Procédé d'aide à la conception de processus, comprenant les étapes consistant à :
amener un ordinateur à comporter une liste de pièces représentant une ou plusieurs pièces comprises dans un produit ;
amener l'ordinateur à comporter une liste de processus représentant un ou plusieurs processus compris dans une ou plusieurs séquences de processus ; et
amener l'ordinateur à associer un ou plusieurs items compris dans la liste de pièces à un ou plusieurs items compris dans la liste de processus,
dans lequel un ou plusieurs items dans la liste de processus et une ou plusieurs configurations basées sur les pièces des un ou plusieurs items dans la liste de pièces sont associés les uns aux autres.

13. Programme, amenant un ordinateur à réaliser un traitement pour :
comporter une liste de pièces représentant une ou plusieurs pièces comprises dans un produit ;
comporter une liste de processus représentant un ou plusieurs processus compris dans une ou plusieurs séquences de processus ; et
associer un ou plusieurs items compris dans la liste de pièces à un ou plusieurs items compris dans la liste de processus,
dans lequel un ou plusieurs items dans la liste de processus et une ou plusieurs configurations basées sur les pièces des un ou plusieurs items dans la liste de pièces sont associés les uns aux autres.
